# FASCICULE DE BREVET EUROPEEN

(11) **EP 2 811 262 B1**
(45) Date de publication et mention de la délivrance du brevet: **23.03.2016**
(21) Numéro de dépôt: 14171142.4
(22) Date de dépôt: 04.06.2014
(51) Int. Cl.: G01D 4/00, H04B 3/54

(54) **Procédé de décision de rattachement d'un compteur électrique à un autre compteur électrique ou à un concentrateur de données**
Verfahren zur Auswahl des Anschlusses eines elektrischen Zählers an einen anderen elektrischen Zähler oder an einen Datenkonzentrator
Decision method for linking an electric meter to another electric meter or to a data concentrator

(30) Priorité: 05.06.2013 FR 1355164
(43) Date de publication de la demande: 10.12.2014
(73) Titulaire: SAGEMCOM ENERGY & TELECOM SAS, 92500 Rueil-Malmaison (FR)
(72) Inventeur: Teboulle, Henri, 92500 Rueil Malmaison (FR); Sergi, Jérémie, 92500 Rueil Malmaison (FR)
(74) Mandataire: Maillet, Alain

(56) Documents cités:
- EP-A1- 2 505 967
- US-A1- 2012 136 638
- NICO SAPUTRO ET AL: "A survey of routing protocols for smart grid communications", COMPUTER NETWORKS, ELSEVIER SCIENCE PUBLISHERS B.V., AMSTERDAM, NL, vol. 56, no. 11, 15 mars 2012 (2012-03-15) , pages 2742-2771, XP028501836, ISSN: 1389-1286, DOI: 10.1016/J.COMNET.2012.03.027 [extrait le 2012-04-20]

## Description

La présente invention concerne un rattachement d'un premier compteur électrique à un second compteur électrique dans un réseau hiérarchisé de communication défini au-dessus d'un réseau polyphasé d'alimentation électrique.

Le document de l'art antérieure XP028501836, N. Saputro et al., "A survey of routing protocols for smart grid communications" divulgue plusieurs procédés de décision de rattachement d'un premier compteur électrique à un second compteur électrique dans le cadre d'un réseau polyphasé d'alimentation électrique.

Dans le cadre d'un réseau d'alimentation électrique de type AMM (« Automated Meter Management » en anglais), des communications sont établies entre des compteurs électriques, dits intelligents (« smart meters » en anglais), et un concentrateur de données (« Data Concentrator » en anglais), parfois appelé *noeud de base* (« base node » en anglais), en charge de collecter des données de mesures effectuées par les compteurs électriques, typiquement de l'énergie consommée par des installations électriques respectivement supervisées par lesdits compteurs électriques. Certains de ces compteurs électriques peuvent servir de relais, parfois appelés *noeuds commutateurs* (« switch nodes » en anglais), entre le concentrateur de données et d'autres compteurs électriques, parfois alors appelés *noeuds terminaux* (« terminal nodes » en anglais). Un réseau hiérarchique de communication est alors défini au-dessus du réseau d'alimentation électrique.

Les réseaux d'alimentation électrique sont typiquement polyphasés, et plus particulièrement triphasés pour ce qui concerne par exemple la France. Le concentrateur de données est alors connecté à une des phases du réseau d'alimentation électrique. Chaque compteur électrique est aussi connecté à une (au moins) des phases du réseau d'alimentation électrique. La situation est alors telle que ces dispositifs, concentrateur de données et compteurs électriques, sont potentiellement connectés sur des phases différentes. Les communications entre ces dispositifs sont alors permises grâce à un phénomène de diaphonie (« cross-talk » en anglais) entre les différentes phases du réseau d'alimentation électrique.

Un problème rencontré avec un tel phénomène de diaphonie est son instabilité dans le temps, ce qui perturbe les communications dans le réseau de communication.

Il est souhaitable de pallier ces différents inconvénients de l'état de la technique.

Il est notamment souhaitable de fiabiliser et de pérenniser autant que possible la définition du réseau de communication, et de fiabiliser les communications au sein de ce réseau de communication, et d'une manière générale, d'améliorer les conditions de transmission dans ce réseau de communication.

Il est aussi souhaitable de fournir une solution qui puisse être facilement mise en oeuvre dans des spécifications PRIME (« *PoweRline Intelligent Metering Evolution* » en anglais).

Il est notamment souhaitable de fournir une solution qui soit simple à mettre en oeuvre et à faible coût.

L'invention concerne un procédé de décision de rattachement d'un premier compteur électrique à un second compteur électrique servant de relais audit premier compteur électrique dans un réseau hiérarchisé de communication défini au-dessus d'un réseau polyphasé d'alimentation électrique. Le procédé est tel que le premier compteur électrique effectue les étapes suivantes : obtenir une première information de phase représentative d'une phase à laquelle est connecté le premier compteur électrique sur le réseau polyphasé d'alimentation électrique ; obtenir des secondes informations de phase représentatives de phases auxquelles sont respectivement connectés, sur le réseau polyphasé d'alimentation électrique, des compteurs électriques auxquels le premier compteur électrique peut être rattaché ; et choisir le second compteur électrique, en prenant au moins en compte ladite première information de phase et lesdites secondes informations de phase.

L'invention concerne également un procédé de décision de rattachement d'un premier compteur électrique à un second compteur électrique servant de relais audit premier compteur électrique dans un réseau hiérarchisé de communication défini au-dessus d'un réseau polyphasé d'alimentation électrique ou à un concentrateur de données qui est racine du réseau hiérarchisé de communication. Le procédé est tel que le premier compteur électrique effectue les étapes suivantes : obtenir une première information de phase représentative d'une phase à laquelle est connecté le premier compteur électrique sur le réseau polyphasé d'alimentation électrique ; obtenir des secondes informations de phase représentatives de phases auxquelles sont respectivement connectés, sur le réseau polyphasé d'alimentation électrique, des dispositifs du réseau hiérarchisé de communication, chacun parmi lesdits dispositifs étant un compteur électrique auquel le premier compteur électrique peut être rattaché ou le concentrateur de données lorsque le premier compteur électrique peut y être rattaché ; et choisir le dispositif auquel le premier compteur électrique doit être rattaché, en prenant au moins en compte ladite première information de phase et lesdites secondes informations de phase. Ainsi, en prenant en compte au moins ces informations de phase, l'utilisation de chemins de diaphonie dans le réseau de communication est limitée. Les conditions de transmission dans le réseau de communication sont améliorées, en limitant notamment les risques de collision et en accroissant la stabilité de la hiérarchie du réseau de communication.

Selon un mode de réalisation particulier, le premier compteur électrique obtient des informations de niveaux hiérarchiques auxquels les dispositifs, auxquels le premier compteur électrique peut être rattaché, appartiennent respectivement au sein du réseau hiérarchisé de communication, et le premier compteur électrique choisit le dispositif auquel le premier compteur électrique doit être rattaché en prenant en outre en compte lesdites informations de niveaux hiérarchiques. Ainsi, la prise en compte de ces niveaux hiérarchiques permet de privilégier comme relais un compteur électrique au plus proche hiérarchiquement d'une racine du réseau de communication hiérarchisé.

Selon un mode de réalisation particulier, le premier compteur électrique obtient des informations représentatives de laps de temps depuis lesquels les compteurs électriques auxquels le premier compteur électrique peut être rattaché agissent respectivement comme relais au sein du réseau hiérarchisé de communication, et le premier compteur électrique choisit le dispositif auquel le premier compteur électrique doit être rattaché en prenant en outre en compte lesdites informations représentatives de laps de temps. Ainsi, le premier compteur électrique peut privilégier comme relais un compteur électrique stabilisé dans le réseau hiérarchisé de communication.

Selon un mode de réalisation particulier, le premier compteur électrique obtient des informations représentatives de rapports signal-à-bruit obtenus par mesures effectuées par le premier compteur électrique sur des signaux reçus en provenance respectivement des dispositifs auxquels le premier compteur électrique peut être rattaché, et le premier compteur électrique choisit le dispositif auquel le premier compteur électrique doit être rattaché en prenant en outre en compte lesdites informations représentatives de rapports signal-à-bruit. Ainsi, le premier compteur électrique peut privilégier comme relais un compteur électrique avec lequel les conditions de transmission sont de bonne qualité.

Selon un mode de réalisation particulier, chaque dispositif auquel le premier compteur électrique peut être rattaché transmet, dans une balise, au moins la seconde information de phase représentative de la phase à laquelle ledit dispositif est connecté sur le réseau polyphasé d'alimentation électrique. Ainsi, un mécanisme de synchronisation par balise peut être enrichi pour permettre au premier compteur électrique de prendre la décision de rattachement.

Selon un mode de réalisation particulier, un champ de ladite balise indique si ladite balise inclut au moins la seconde information de phase représentative de la phase à laquelle ledit dispositif est connecté sur le réseau polyphasé d'alimentation électrique, et, sur un ensemble de N_{miss-beacon} balises consécutives, où N_{miss-beacon} est représentatif d'un nombre maximum de balises consécutives erronées avant détachement du réseau hiérarchisé de communication, ledit dispositif émet un nombre K de balises incluant au moins ladite seconde information de phase, avec K < N_{miss-beacon}. Ainsi, la compatibilité est assurée avec des dispositifs ne prenant pas en compte lesdites informations de phase pour décider de leur rattachement au sein du réseau hiérarchisé de communication.

Selon un mode de réalisation particulier, ladite seconde information de phase est incluse dans un champ dédié de la balise, et, ledit dispositif étant un compteur électrique, la balise comportant en outre un champ de coût de chemin depuis la racine du réseau hiérarchique jusqu'audit dispositif, la parité du champ de coût de chemin est représentative d'un laps de temps depuis lequel ledit dispositif agit comme relais au sein du réseau hiérarchisé de communication. Ainsi, la mise en oeuvre est simple et peu intrusive quant à la finalité initiale de la balise et des champs que cette balise comporte.

Selon un mode de réalisation particulier, la balise comportant en outre un champ de coût de chemin depuis une racine du réseau hiérarchique et ledit dispositif, ledit dispositif étant un compteur électrique, ledit dispositif adapte la valeur dudit champ de coût de chemin de telle sorte que ladite valeur modulo MxN fournisse ladite seconde information de phase et une information représentative d'un laps de temps depuis lequel ledit dispositif agit comme relais au sein du réseau hiérarchisé de communication, avec N représentant le nombre de phases du réseau polyphasé d'alimentation électrique et M représentant un nombre d'états que peut prendre ladite information représentative d'un laps de temps. Ainsi, la mise en oeuvre est simple, en limitant le nombre de bits nécessaires à la transmission des informations de phase et de laps de temps.

L'invention concerne également un compteur électrique, dit premier compteur électrique, adapté pour décider d'un rattachement dudit premier compteur électrique à un second compteur électrique servant de relais audit premier compteur électrique dans un réseau hiérarchisé de communication défini au-dessus d'un réseau polyphasé d'alimentation électrique ou à un concentrateur de données qui est racine du réseau hiérarchisé de communication. Le premier compteur électrique comporte : des moyens pour obtenir une première information de phase représentative d'une phase à laquelle est connecté le premier compteur électrique sur le réseau polyphasé d'alimentation électrique ; des moyens pour obtenir des secondes informations de phase représentatives de phases auxquelles sont respectivement connectés, sur le réseau polyphasé d'alimentation électrique, des dispositifs du réseau hiérarchisé de communication, chacun parmi lesdits dispositifs étant un compteur électrique auquel le premier compteur électrique peut être rattaché ; et des moyens pour choisir le dispositif auquel le premier compteur électrique doit être rattaché, en prenant au moins en compte ladite première information de phase et lesdites secondes informations de phase.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus, lorsque ledit programme est exécuté par le processeur. L'invention concerne également des moyens de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un système électrique dans lequel l'invention peut être mise en oeuvre ;
- la Fig. 2 illustre schématiquement un exemple de tout ou partie d'une architecture matérielle d'un dispositif du système électrique, tel qu'un compteur électrique ;
- la Fig. 3 illustre schématiquement un exemple de réseau hiérarchisé de communication défini au-dessus d'un réseau d'alimentation électrique du système électrique ;
- la Fig. 4 illustre schématiquement un algorithme, mis en oeuvre par un compteur électrique, de décision de rattachement dudit compteur électrique à un autre compteur électrique agissant en tant que noeud commutateur ;
- la Fig. 5 illustre schématiquement un autre algorithme, mis en oeuvre par un compteur électrique, de décision de rattachement dudit compteur électrique à un autre compteur électrique agissant en tant que noeud commutateur, selon un premier mode de réalisation ;
- la Fig. 6 illustre schématiquement encore un autre algorithme, mis en oeuvre par un compteur électrique, de décision de rattachement dudit compteur électrique à un autre compteur électrique agissant en tant que noeud commutateur, selon un second mode de réalisation ;
- la Fig. 7 illustre schématiquement un algorithme, mis en oeuvre par un noeud commutateur, de propagation d'informations pour permettre à un compteur électrique de décider à quel noeud commutateur se rattacher ;
- la Fig. 8 illustre schématiquement un format de balise, tel qu'utilisé dans le cadre de la propagation d'informations de la Fig. 7.

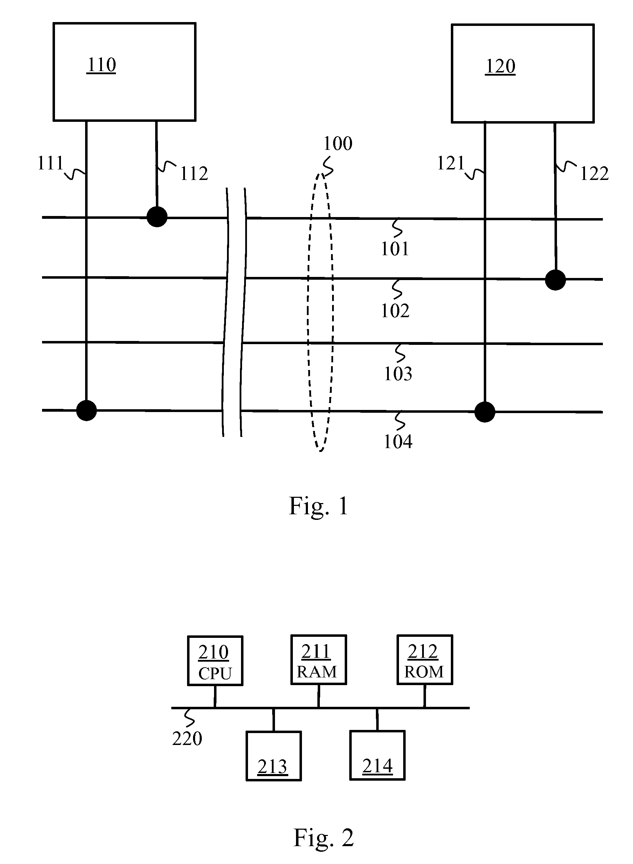

La Fig. 1 illustre schématiquement un système électrique dans lequel l'invention peut être mise en oeuvre.

Le système électrique de la Fig. 1 comporte un réseau d'alimentation électrique 100 constitué d'une pluralité de fils, un fil étant dédié au neutre et au moins un fil étant dédié à au moins une phase. Dans l'exemple de réalisation représenté par la Fig. 1, le réseau d'alimentation électrique 100 est un système à trois phases, et est donc constitué de quatre fils: un fil de neutre 104, un fil d'une première phase 101, un fil d'une seconde phase 102 et un fil de troisième phase 103. La séparation des phases est donc de 120 degrés entre les deux phases, et serait de 180 degrés dans le cas d'un système à deux phases, puisque dans les réseaux électriques polyphasés, les phases sont en général à égale distance angulaire.

Le système électrique de la Fig. 1 comporte en outre un compteur électrique 120, c'est-à-dire un dispositif servant à mesurer la quantité d'énergie électrique consommée par une installation électrique que le compteur électrique 120 est en charge de superviser. Le compteur électrique 120 est connecté à un des fils de phase du réseau d'alimentation électrique 100 ainsi qu'au fil de neutre, par des liens respectifs 122 et 121. On est, dans ce cas, en présence d'un compteur électrique monophasé. Le système électrique de la Fig. 1 pourrait reposer sur une mise en oeuvre d'un compteur électrique polyphasé.

Plusieurs compteurs électriques sont ainsi connectés au réseau d'alimentation électrique 100, certains étant connectés sur une phase et d'autres étant connectés sur une autre phase.

Le système électrique de la Fig. 1 comporte en outre un concentrateur de données 110 en charge de collecter des données de mesure effectuées par les compteurs électriques connectés au réseau d'alimentation électrique 100. Le concentrateur de données 110 est connecté à un des fils de phase du réseau d'alimentation électrique 100 ainsi qu'au fil de neutre, par des liens respectifs 112 et 111. On voit sur l'exemple de la Fig. 1 que le concentrateur de données 110 et le compteur électrique 120 sont connectés au réseau d'alimentation électrique 100 via des phases distinctes. Le concentrateur de données 110 et le compteur électrique 120 pourraient être connectés au réseau d'alimentation électrique 100 via une même phase.

Le concentrateur de données 110 et/ou chaque compteur électrique pourraient être connectés au réseau d'alimentation électrique 100 via plusieurs phases. Dans ce cas, les mécanismes décrits peuvent s'appliquer pour une de ces phases auxquelles le compteur électrique 120 est connecté ,ou indépendamment pour chacun d'elles.

Chacun de ces dispositifs, concentrateur de données et compteurs électriques, ont la connaissance *a priori* de la phase sur laquelle ledit dispositif est connecté. Cela peut être réalisé en renseignant au moment de l'installation, via une interface utilisateur dédiée du compteur électrique ou du concentrateur de données, la phase sur laquelle le dispositif a été connecté par l'installateur. D'autres méthodes sont connues de l'état de la technique, comme par exemple celle décrite dans le document *"*IEC 61334-5-1:2001, Automatisation de la distribution à l'aide de systèmes de communication à courants porteurs - Partie 5-1: Profils des couches basses - Profil S-FSK (modulation pour saut de fréquences étalées*)"* ou celle décrite dans les spécifications PRIME.

La Fig. 2 illustre schématiquement un exemple d'architecture matérielle d'au moins une partie du compteur électrique 120 et/ou du concentrateur de données 110.

Considérons la Fig. 2 dans le cadre du compteur électrique 120. Le compteur électrique 120 comprend alors, reliés par un bus de communication 220 : un processeur ou CPU (« Central Processing Unit » en anglais) 210 ; une mémoire vive RAM (« Random Access Memory» en anglais) 211 ; une mémoire morte ROM (« Read Only Memory» en anglais) 212 ; une unité de stockage ou un lecteur de support de stockage, tel qu'un lecteur de cartes SD (« Secure Digital » en anglais) 213 ; un ensemble 214 d'interfaces de connexion permettant de connecter le compteur électrique 120 au réseau d'alimentation électrique 100.

Le processeur 200 est capable d'exécuter des instructions chargées dans la RAM 211 à partir de la ROM 212, d'une mémoire externe (non représentée), d'un support de stockage, tel qu'une carte SD, ou d'un réseau de communication. Lorsque le compteur électrique 120 est mis sous tension, le processeur 210 est capable de lire de la RAM 211 des instructions et de les exécuter. Ces instructions forment un programme d'ordinateur causant la mise en oeuvre, par le processeur 210, de tout ou partie des algorithmes et étapes décrits ci-après.

Tout ou partie des algorithmes et étapes décrits ci-après peut être implémenté sous forme logicielle par exécution d'un ensemble d'instructions par une machine programmable, tel qu'un DSP (« Digital Signal Processor » en anglais) ou un microcontrôleur, ou être implémenté sous forme matérielle par une machine ou un composant dédié, tel qu'un FPGA (« Field-Programmable Gate Array » en anglais) ou un ASIC (« Application-Specific Integrated Circuit » en anglais).

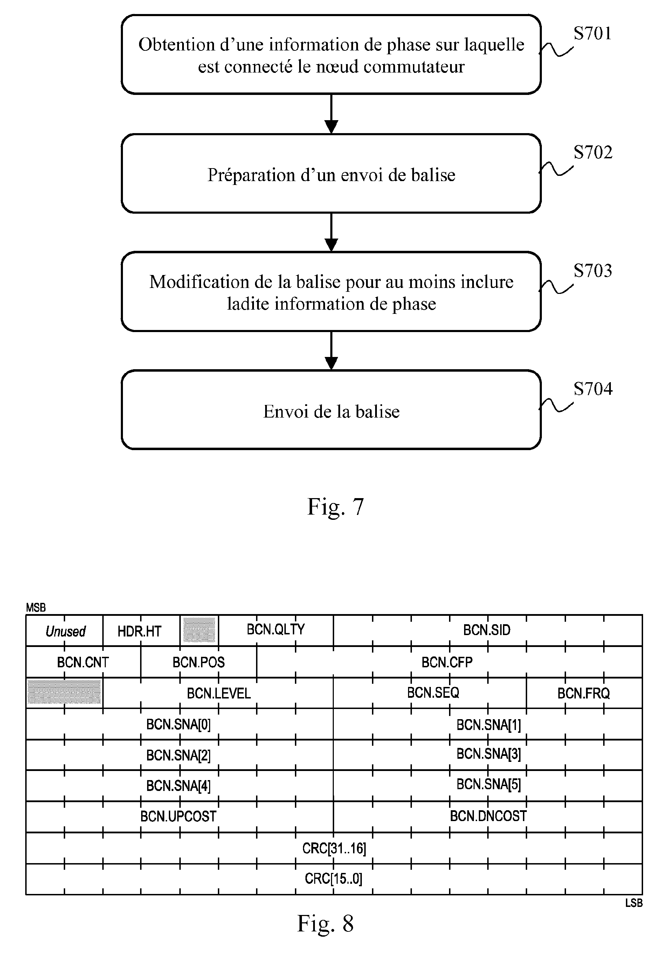

Un réseau hiérarchisé de communication est défini au-dessus du réseau d'alimentation électrique 100 pour permettre au concentrateur de données 110, aussi appelé *noeud de base*, et aux compteurs électriques d'échanger des données, grâce à des courants porteurs en ligne (« Powerline transmissions » en anglais). Le concentrateur de données 110 est alors la racine (« root » en anglais) du réseau hiérarchisé de communication. Les spécifications PRIME sont préférentiellement mises en oeuvre, aménagées comme détaillé par la suite en relation avec la Fig. 7.

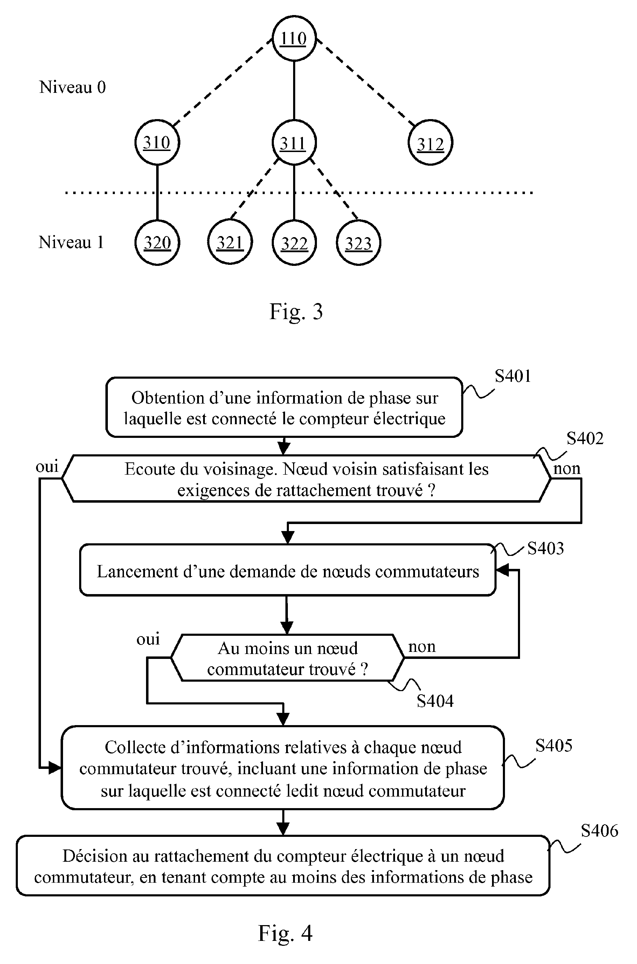

Un exemple d'un tel réseau hiérarchisé de communication est présenté à la Fig. 3. On y retrouve le concentrateur de données 110, ainsi qu'un ensemble illustratif de huit compteurs électriques, tels que le compteur électrique 120.

La hiérarchie du réseau de communication définit ainsi des rattachements de noeud les uns aux autres. On dit qu'un premier noeud est rattaché à un second noeud, lorsque le premier noeud utilise ledit second noeud comme référence de synchronisation dans le réseau de communication et utilise ledit second noeud comme relais pour échanger des données avec le concentrateur de données 110. Cette fonction de relais est assurée par des compteurs électriques que l'on appelle parfois *noeuds commutateurs*. La fonction de relais permet à un compteur électrique de communiquer avec un autre compteur électrique ou avec le concentrateur de données 110, si les caractéristiques du lien physique qui les relie (éventuellement par diaphonie) ne le permet pas directement, et ce, même si ces deux entités sont connectées physiquement sur une même phase.

Sur la Fig. 3, des compteurs électriques 310, 311 et 312 sont directement rattachés au concentrateur de données 110. L'ensemble formé par le concentrateur de données 110 et les compteurs électriques 310, 311 et 312 définit un premier niveau, dit « niveau 0 », dans la hiérarchie du réseau de communication. Un compteur électrique 320 est rattaché au compteur électrique 310, qui sert alors de relais entre le compteur électrique 320 et le concentrateur de données 110. Le compteur électrique 310 joue alors le rôle de noeud commutateur. Des compteurs électriques 321, 322 et 323 sont rattachés au compteur électrique 311, qui sert alors de relais entre, d'une part, chacun des compteurs électriques 321, 322 et 323, et, d'autre part, le concentrateur de données 110. Le compteur électrique 311 joue alors aussi le rôle de noeud commutateur. Aucun compteur électrique n'est rattaché au compteur électrique 312, qui est alors défini comme *noeud terminal*. L'ensemble formé par les compteurs électriques 320, 321, 322 et 323 définit un second niveau, dit « niveau 1 », dans la hiérarchie du réseau de communication. Ainsi, un compteur électrique rattaché à un autre compteur électrique dans la hiérarchie du réseau de communication est associé à un niveau qui est égal au niveau auquel est associé ledit autre compteur incrémenté d'une unité. En d'autres termes, le niveau associé à un compteur électrique indique le nombre de relais, ou de noeuds commutateurs, entre ledit compteur électrique et le concentrateur de données 110 dans la hiérarchie du réseau de communication.

Sur la Fig. 3, des lignes représentent les rattachements de noeuds dans le réseau hiérarchisé de communication. Les lignes pleines représentent des rattachements de noeuds connectés à une même phase, et les lignes pointillées représentent des rattachements de noeuds connectés à des phases distinctes, c'est-à-dire que ces lignes pointillées représentent des chemins de diaphonie. Ainsi, le noeud commutateur 311 est rattaché au noeud de base 110 via une même phase, le noeud commutateur 310 est rattaché au noeud de base 110 via des phases distinctes, et le noeud terminal 312 est aussi rattaché au noeud de base 110 via des phases distinctes. De plus, le noeud terminal 322 est rattaché au noeud commutateur 311 via une même phase, et les noeuds terminaux 321 et 323 sont rattachés au noeud commutateur 311 via des phases respectives distinctes de la phase à laquelle est connecté le noeud commutateur 311. Enfin, le noeud terminal 320 est rattaché au noeud commutateur 310 via une même phase.

La manière selon laquelle un compteur électrique décide de se rattacher au concentrateur de données 110 ou à un autre compteur électrique est détaillée ci-après en relation avec les Figs. 4 à 6.

La Fig. 4 illustre schématiquement un algorithme, mis en oeuvre par un compteur électrique, de décision de rattachement dudit compteur électrique à un autre compteur électrique, ou au concentrateur de données 110, agissant en tant que noeud commutateur. Considérons que l'algorithme est mis en oeuvre par le compteur électrique 120.

Dans une étape S401, le compteur électrique 120 obtient une information de phase sur laquelle est connecté le compteur électrique 120. Comme déjà mentionné, cette information de phase peut être fournie au compteur électrique 120 au moment de l'installation du compteur électrique 120, ou par un autre moyen.

Dans une étape S402 suivante, le compteur électrique 120 écoute s'il y a au moins un dispositif auquel le compteur électrique 120 peut se rattacher dans son voisinage, c'est-à-dire s'il existe au moins un dispositif à partir duquel le compteur électrique 120 reçoit des signaux. Si aucun tel dispositif n'existe, une étape S403 est effectuée. Si au moins un tel dispositif existe, le compteur électrique 120 peut prendre l'initiative de passer directement à une étape S405. Le compteur électrique 120 peut également choisir d'effectuer l'étape S403 même si au moins un dispositif auquel le compteur électrique 120 peut être rattaché a été détecté à l'étape S402.

Dans l'étape S403, le compteur électrique 120 lance une demande de noeuds commutateurs. En d'autres termes, le compteur électrique 120 lance une recherche, aussi parfois appelée *découverte*, de noeuds commutateurs. Cette recherche peut aussi amener le compteur électrique 120 à découvrir la présence dans son voisinage du concentrateur de données 110. Le compteur électrique 120 détermine ainsi les noeuds ou dispositifs, du réseau de communication, qui sont à portée de signaux de communication de la part du compteur électrique 120. Une telle étape de demande de noeuds commutateur est par exemple décrite dans les spécifications PRIME. Il convient de noter qu'un compteur électrique agissant en tant que noeud terminal peut être sollicité par le compteur électrique 120 pour agir en tant que noeud commutateur. Sur requête du compteur électrique 120, ce noeud terminal prend alors le rôle de noeud commutateur (on dit parfois que le noeud terminal est *promu* noeud commutateur), sur lequel le compteur électrique 120 peut se rattacher au besoin. Les noeuds terminaux peuvent déclencher des demandes de promotion d'autres noeuds terminaux, mais la décision est prise par le concentrateur de données 110. Ensuite l'étape S404 est effectuée.

Dans l'étape S404, le compteur électrique 120 vérifie si au moins un dispositif a été découvert, par exemple suite à la demande de noeuds commutateurs de l'étape S403. Si tel est le cas, une étape S405 est effectuée ; sinon, l'étape S403 est répétée.

Dans l'étape S405, le compteur électrique 120 collecte des informations relatives à chaque dispositif découvert. Ces informations incluent au moins une information de phase sur laquelle ledit dispositif découvert est connecté. Dans un mode de réalisation particulier, cette information de phase est fournie, par ledit dispositif découvert, dans une balise (« beacon » en anglais) transmise par ledit dispositif découvert pour permettre une synchronisation au niveau MAC (« Medium Access Control » en anglais) des noeuds du réseau de communication. Ces informations peuvent en outre inclure une information de niveau hiérarchique auquel ledit dispositif découvert appartient au sein du réseau de communication. Dans un mode de réalisation particulier, cette information de stabilité est aussi fournie dans la balise par ledit dispositif découvert. Ces informations peuvent en outre inclure, lorsque ledit dispositif découvert est un noeud commutateur, une information représentative d'un temps écoulé depuis que ledit dispositif découvert a pris le rôle de noeud commutateur, c'est-à-dire une information de stabilité, dudit dispositif découvert, dans son rôle de noeud commutateur. Dans un mode de réalisation particulier, cette information de stabilité est aussi fournie dans la balise par ledit dispositif découvert. Ces informations peuvent en outre inclure une information représentative d'une qualité de signaux reçus par le compteur électrique 120 en provenance dudit dispositif découvert, comme par exemple un rapport signal-à-bruit SNR (« Signal-to-Noise Ratio » en anglais) obtenu par mesures effectuées par le compteur électrique 120 sur les signaux reçus par le compteur électrique 120 en provenance dudit dispositif découvert.

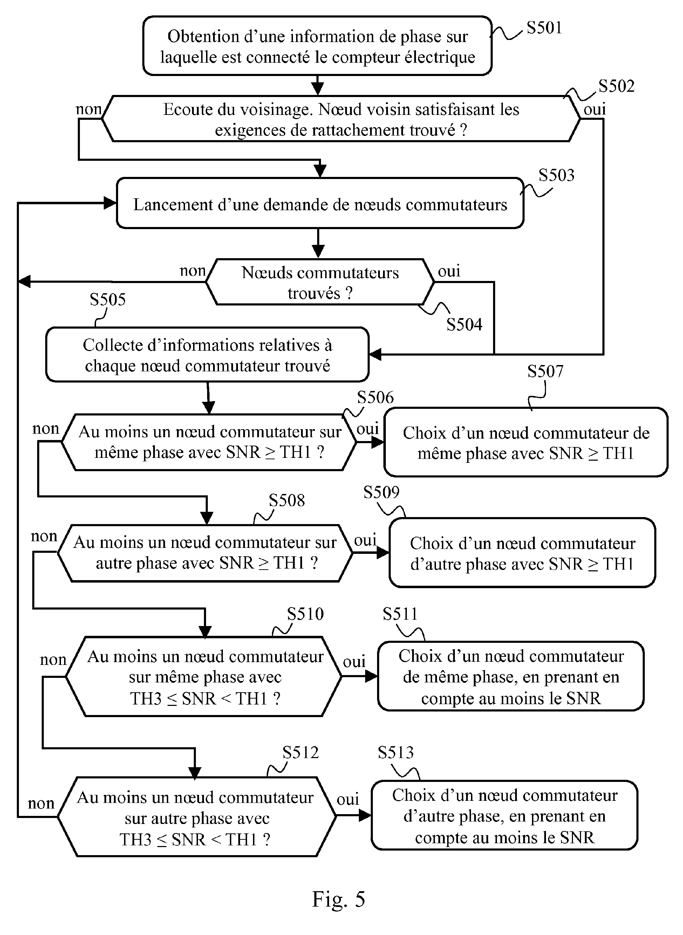

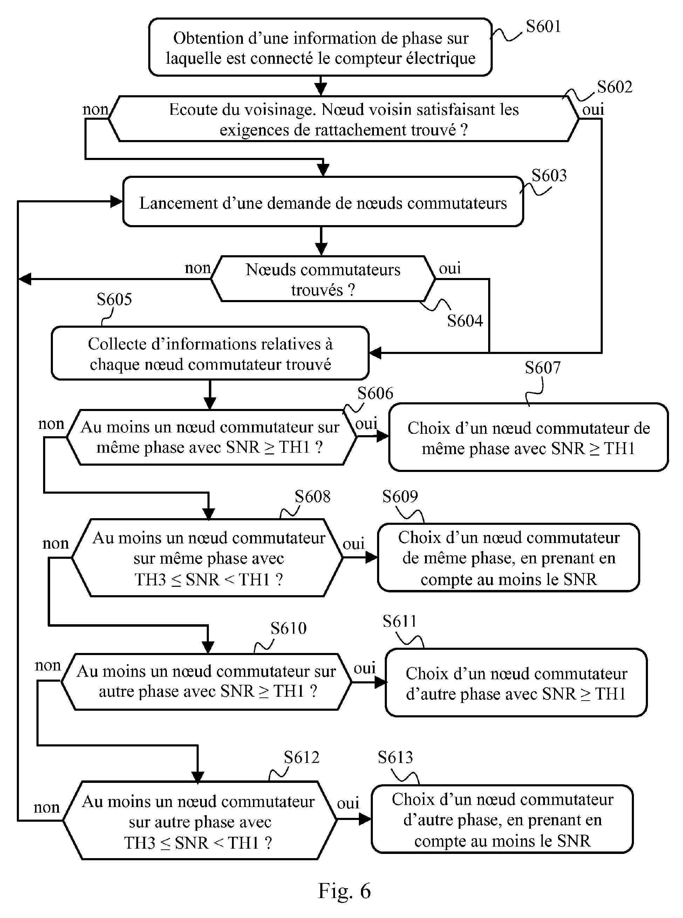

Dans une étape S406 suivante, le compteur électrique 120 décide de se rattacher, dans la hiérarchie du réseau de communication, à un dispositif parmi les dispositifs identifiés comme découverts à l'étape S402 ou S404, en tenant compte au moins de l'information de phase sur laquelle est connecté le compteur électrique 120 et de chaque information de phase sur laquelle est connecté chaque dispositif respectif identifié comme découvert à l'étape S402 ou S404. Le compteur électrique 120 peut en outre tenir compte de l'information de niveau hiérarchique de chaque dispositif découvert et/ou de l'information de stabilité de chaque dispositif (noeud commutateur) découvert et/ou de l'information de qualité de signaux reçus en provenance de chaque dispositif découvert. Un premier mode de réalisation de cette étape de décision est décrit ci-après en relation avec la Fig. 5 et un second mode de réalisation de cette étape de décision est décrit ci-après en relation avec la Fig. 6.

A noter que dans la suite du document, le critère de stabilité ne s'applique pas si la phase à laquelle est connecté le compteur électrique considéré est inconnue.

La Fig. 5 illustre schématiquement un autre algorithme, mis en oeuvre par un compteur électrique, de décision de rattachement dudit compteur électrique à un autre compteur électrique agissant en tant que noeud commutateur ou au concentrateur de données 110, selon le premier mode de réalisation. Considérons que l'algorithme est mis en oeuvre par le compteur électrique 120.

Dans une étape S501, le compteur électrique 120 obtient une information de phase sur laquelle est connecté le compteur électrique 120. L'étape S501 est identique à l'étape S401.

Dans une étape S502 suivante, le compteur électrique 120 écoute s'il y a au moins un dispositif auquel le compteur électrique 120 peut se rattacher dans son voisinage, c'est-à-dire s'il existe au moins un dispositif à partir duquel le compteur électrique 120 reçoit des signaux.. L'étape S502 est identique à l'étape S402. Si aucun tel dispositif n'existe, une étape S503 est effectuée. Si au moins un tel dispositif existe, le compteur électrique 120 peut prendre l'initiative de passer directement à une étape S505. Le compteur électrique 120 peut également choisir d'effectuer l'étape S503 même si au moins un dispositif auquel le compteur électrique 120 peut être rattaché a été détecté à l'étape S502.

Dans l'étape S503, le compteur électrique 120 lance une demande de noeuds commutateurs. En d'autres termes, le compteur électrique 120 lance une recherche de noeuds commutateurs. L'étape S503 est identique à l'étape S403. Ensuite, l'étape S504 est effectuée.

Dans l'étape S504, le compteur électrique 120 vérifie si au moins un dispositif a été découvert, par exemple suite à la demande de noeuds commutateurs de l'étape S503. Si tel est le cas, une étape S505 est effectuée ; sinon, l'étape S503 est répétée.

Dans l'étape S505, le compteur électrique 120 collecte des informations relatives à chaque dispositif découvert. L'étape S505 est identique à l'étape S405.

Dans une étape S506 suivante, le compteur électrique 120 détermine si, parmi les dispositifs identifiés comme découverts à l'étape S502 ou S504, au moins un dispositif est connecté sur la même phase que le compteur électrique 120, avec une information de qualité de signaux reçus dudit noeud commutateur représentative d'un rapport signal-à-bruit supérieur ou égal à un premier seuil TH1. Par exemple, le premier seuil TH1 est fixé à 10 dB. Si tel est le cas, une étape S507 est effectuée ; sinon, une étape S508 est effectuée.

Dans l'étape S507, le compteur électrique 120 choisit de se rattacher à un dispositif connecté sur la même phase que le compteur électrique 120, avec une information de qualité de signaux reçus dudit dispositif représentative d'un rapport signal à bruit supérieur ou égal au premier seuil TH1. Lorsque plusieurs dispositifs respectent ces critères, le compteur électrique 120 choisit, parmi ces dispositifs, un dispositif noeud commutateur pour lequel l'information de stabilité montre que ledit dispositif noeud commutateur tient le rôle de noeud commutateur depuis un laps de temps supérieur à un second seuil TH2 prédéfini. Par exemple, le seuil TH2 est fixé à 4 heures. Lorsque plusieurs noeuds commutateurs respectent ce critère supplémentaire ou qu'aucun noeud commutateur ne respecte ce critère supplémentaire, le compteur électrique 120 choisit, parmi ces dispositifs, un dispositif de niveau hiérarchique le plus faible, c'est-à-dire le plus proche hiérarchiquement du concentrateur de données 110. Lorsque plusieurs dispositifs respectent cet autre critère supplémentaire, le compteur électrique 120 choisit, parmi ces dispositifs, le dispositif présentant le meilleur rapport signal-à-bruit.

Dans l'étape S508, le compteur électrique 120 détermine si, parmi les dispositifs identifiés comme découverts à l'étape S502 ou S504, au moins un dispositif est connecté sur une phase différente que le compteur électrique 120 ou sur une phase inconnue, avec une information de qualité de signaux reçus dudit dispositif représentative d'un rapport signal-à-bruit supérieur ou égal au premier seuil TH1. Si tel est le cas, une étape S509 est effectuée ; sinon, une étape S510 est effectuée.

Il peut y avoir des situations où certains compteurs électriques du réseau hiérarchisé de communication n'implémentent pas la présente invention et ne permettent pas aux autres compteurs électriques d'obtenir une information de phase sur laquelle lesdits compteurs électriques sont respectivement connectés. Dans ce cas, le compteur électrique 120 peut ne pas connaître la phase à laquelle est respectivement connecté chacun des dispositifs identifiés comme découverts à l'étape S502 ou S504.

Dans l'étape S509, le compteur électrique 120 choisit de se rattacher à un dispositif connecté sur une phase différente que le compteur électrique 120 ou sur une phase inconnue, avec une information de qualité de signaux reçus dudit dispositif représentative d'un rapport signal à bruit supérieur ou égal au premier seuil TH1. Lorsque plusieurs dispositifs respectent ces critères, le compteur électrique 120 choisit, parmi ces dispositifs, un dispositif noeud commutateur pour lequel l'information de stabilité montre que ledit dispositif noeud commutateur tient le rôle de noeud commutateur depuis un laps de temps supérieur au second seuil TH2. Lorsque plusieurs noeuds commutateurs respectent ce critère supplémentaire ou qu'aucun noeud commutateur ne respecte ce critère supplémentaire, le compteur électrique 120 choisit, parmi ces dispositif, un dispositif de niveau hiérarchique le plus faible, c'est-à-dire le plus proche hiérarchiquement du concentrateur de données 110. Lorsque plusieurs dispositifs respectent cet autre critère supplémentaire, le compteur électrique 120 choisit, parmi ces dispositifs, le dispositif présentant le meilleur rapport signal-à-bruit.

Dans l'étape S510, le compteur électrique 120 détermine si, parmi les dispositifs identifiés comme découverts à l'étape S502 ou S504, au moins un dispositif est connecté sur la même phase que le compteur électrique 120, avec une information de qualité de signaux reçus dudit dispositif représentative d'un rapport signal-à-bruit inférieur au premier seuil TH1 et supérieur ou égal à un troisième seuil TH3. Par exemple, le seuil TH3 est fixé à 3 dB. Si tel est le cas, une étape S511 est effectuée ; sinon, une étape S512 est effectuée.

Dans l'étape S511, le compteur électrique 120 choisit de se rattacher à un dispositif connecté sur la même phase que le compteur électrique 120, avec une information de qualité de signaux reçus dudit dispositif représentative d'un rapport signal à bruit inférieur au premier seuil TH1 et supérieur ou égal au troisième seuil TH3. Lorsque plusieurs dispositifs respectent ces critères, le compteur électrique 120 choisit, parmi ces dispositifs, un dispositif pour lequel l'information de qualité de signaux reçus dudit dispositif est représentative du meilleur rapport signal à bruit. Lorsque plusieurs dispositifs présentent ce meilleur rapport signal à bruit, le compteur électrique 120 choisit, parmi ces dispositifs, un dispositif noeud commutateur pour lequel l'information de stabilité montre que ledit dispositif noeud commutateur tient le rôle de noeud commutateur depuis un laps de temps supérieur au second seuil TH2. Lorsque plusieurs dispositifs respectent ce critère supplémentaire ou qu'aucun dispositif ne respecte ce critère supplémentaire, le compteur électrique 120 choisit, parmi ces dispositifs, un dispositif de niveau hiérarchique le plus faible, c'est-à-dire le plus proche hiérarchiquement du concentrateur de données 110. Lorsque plusieurs dispositifs respectent cet autre critère supplémentaire, le compteur électrique 120 choisit arbitrairement, parmi ces dispositifs, un dispositif pour se rattacher.

Dans l'étape S512, le compteur électrique 120 détermine si, parmi les dispositifs identifiés comme découverts à l'étape S502 ou S504, au moins un dispositif est connecté sur une phase différente que le compteur électrique 120 ou sur une phase inconnue, avec une information de qualité de signaux reçus dudit dispositif représentative d'un rapport signal-à-bruit inférieur au premier seuil TH1 et supérieur ou égal au troisième seuil TH3. Si tel est le cas, une étape S513 est effectuée ; sinon, il est considéré qu'aucun dispositif découvert ne permet un rattachement avec une qualité de communication suffisante, et l'étape S503 est répétée.

Dans l'étape S513, le compteur électrique 120 choisit de se rattacher à un dispositif connecté sur une phase différente que le compteur électrique 120 ou sur une phase inconnue, avec une information de qualité de signaux reçus dudit dispositif représentative d'un rapport signal à bruit inférieur au premier seuil TH1 et supérieur ou égal au troisième seuil TH3. Lorsque plusieurs dispositifs respectent ces critères, le compteur électrique 120 choisit, parmi ces dispositifs, un dispositif pour lequel l'information de qualité de signaux reçus dudit dispositif est représentative du meilleur rapport signal à bruit. Lorsque plusieurs dispositifs présentent ce meilleur rapport signal à bruit, le compteur électrique 120 choisit, parmi ces dispositifs, un dispositif noeud commutateur pour lequel l'information de stabilité montre que ledit dispositif noeud commutateur tient le rôle de noeud commutateur depuis un laps de temps supérieur au second seuil TH2. Lorsque plusieurs dispositifs respectent ce critère supplémentaire ou qu'aucun dispositif ne respecte ce critère supplémentaire, le compteur électrique 120 choisit, parmi ces dispositifs, un dispositif de niveau hiérarchique le plus faible, c'est-à-dire le plus proche hiérarchiquement du concentrateur de données 110. Lorsque plusieurs dispositifs respectent cet autre critère supplémentaire, le compteur électrique 120 choisit arbitrairement, parmi ces dispositifs, un dispositif pour se rattacher.

La Fig. 6 illustre schématiquement encore un autre algorithme, mis en oeuvre par un compteur électrique, de décision de rattachement dudit compteur électrique à un autre compteur électrique agissant en tant que noeud commutateur ou au concentrateur de données 110, selon un second mode de réalisation. Considérons que l'algorithme est mis en oeuvre par le compteur électrique 120.

Dans une étape S601, le compteur électrique 120 obtient une information de phase sur laquelle est connecté le compteur électrique 120. L'étape S601 est identique à l'étape S401.

Dans une étape S602 suivante, le compteur électrique 120 écoute s'il y a au moins un dispositif auquel le compteur électrique 120 peut se rattacher dans son voisinage, c'est-à-dire s'il existe au moins un dispositif à partir duquel le compteur électrique 120 reçoit des signaux.. L'étape S602 est identique à l'étape S402. Si aucun tel dispositif n'existe, une étape S603 est effectuée. Si au moins un tel dispositif existe, le compteur électrique 120 peut prendre l'initiative de passer directement à une étape S605. Le compteur électrique 120 peut également choisir d'effectuer l'étape S603 même si au moins un dispositif auquel le compteur électrique 120 peut être rattaché a été détecté à l'étape S602.

Dans l'étape S603, le compteur électrique 120 lance une demande de noeuds commutateurs. En d'autres termes, le compteur électrique 120 lance une recherche de noeuds commutateurs. L'étape S603 est identique à l'étape S403. Ensuite, l'étape S604 est effectuée.

Dans l'étape S604, le compteur électrique 120 vérifie si au moins un dispositif a été découvert, par exemple suite à la demande de noeuds commutateurs de l'étape S603. Si tel est le cas, une étape S605 est effectuée ; sinon, l'étape S603 est répétée.

Dans l'étape S605, le compteur électrique 120 collecte des informations relatives à chaque dispositif découvert. L'étape S605 est identique à l'étape S405.

Dans une étape S606 suivante, le compteur électrique 120 détermine si, parmi les dispositifs identifiés comme découverts à l'étape S602 ou S604, au moins un dispositif est connecté sur la même phase que le compteur électrique 120, avec une information de qualité de signaux reçus dudit dispositif représentative d'un rapport signal à bruit supérieur ou égal au premier seuil TH1. Comme déjà mentionné, le premier seuil TH1 est fixé par exemple à 10 dB. Si tel est le cas, une étape S607 est effectuée ; sinon, une étape S608 est effectuée.

Dans l'étape S607, le compteur électrique 120 choisit de se rattacher à un dispositif connecté sur la même phase que le compteur électrique 120, avec une information de qualité de signaux reçus dudit dispositif représentative d'un rapport signal à bruit supérieur ou égal au premier seuil TH1. Lorsque plusieurs dispositifs respectent ces critères, le compteur électrique 120 choisit, parmi ces dispositifs, un dispositif noeud commutateur pour lequel l'information de stabilité montre que ledit dispositif noeud commutateur tient le rôle de noeud commutateur depuis un laps de temps supérieur au second seuil TH2. Comme déjà mentionné, le seuil TH2 est par exemple fixé à 4 heures. Lorsque plusieurs dispositifs respectent ce critère supplémentaire ou qu'aucun dispositif ne respecte ce critère supplémentaire, le compteur électrique 120 choisit, parmi ces dispositifs, un dispositif de niveau hiérarchique le plus faible, c'est-à-dire le plus proche hiérarchiquement du concentrateur de données 110. Lorsque plusieurs dispositifs respectent cet autre critère supplémentaire, le compteur électrique 120 choisit, parmi ces dispositifs, le dispositif présentant le meilleur rapport signal-à-bruit.

Dans l'étape S608, le compteur électrique 120 détermine si, parmi les dispositifs identifiés comme découverts à l'étape S602 ou S604, au moins un dispositif est connecté sur la même phase que le compteur électrique 120, avec une information de qualité de signaux reçus dudit dispositif représentative d'un rapport signal-à-bruit inférieur au premier seuil TH1 et supérieur ou égal au troisième seuil TH3. Comme déjà mentionné, le seuil TH3 est par exemple fixé à 3 dB. Si tel est le cas, une étape S609 est effectuée ; sinon, une étape S610 est effectuée.

Dans l'étape S609, le compteur électrique 120 choisit de se rattacher à un dispositif connecté sur la même phase que le compteur électrique 120, avec une information de qualité de signaux reçus dudit dispositif représentative d'un rapport signal à bruit inférieur au premier seuil TH1 et supérieur ou égal au troisième seuil TH3. Lorsque plusieurs dispositifs respectent ces critères, le compteur électrique 120 choisit, parmi ces dispositifs, un dispositif pour lequel l'information de qualité de signaux reçus dudit dispositif est représentative du meilleur rapport signal à bruit. Lorsque plusieurs dispositifs présentent ce meilleur rapport signal à bruit, le compteur électrique 120 choisit, parmi ces dispositifs, un dispositif noeud commutateur pour lequel l'information de stabilité montre que ledit noeud commutateur tient le rôle de noeud commutateur depuis un laps de temps supérieur au second seuil TH2. Lorsque plusieurs dispositifs respectent ce critère supplémentaire ou qu'aucun dispositif ne respecte ce critère supplémentaire, le compteur électrique 120 choisit, parmi ces dispositifs, un dispositif de niveau hiérarchique le plus faible, c'est-à-dire le plus proche hiérarchiquement du concentrateur de données 110. Lorsque plusieurs dispositifs respectent cet autre critère supplémentaire, le compteur électrique 120 choisit arbitrairement, parmi ces dispositifs, un dispositif pour se rattacher.

Dans l'étape S610, le compteur électrique 120 détermine si, parmi les dispositifs identifiés comme découverts à l'étape S602 ou S604, au moins un dispositif est connecté sur une phase différente que le compteur électrique 120 ou sur une phase inconnue, avec une information de qualité de signaux reçus dudit dispositif représentative d'un rapport signal-à-bruit supérieur ou égal au premier seuil TH1. Si tel est le cas, une étape S611 est effectuée ; sinon, une étape S612 est effectuée.

Comme déjà mentionné, il peut y avoir des situations où certains compteurs électriques du réseau hiérarchisé de communication n'implémentent pas la présente invention et ne permettent pas aux autres compteurs électriques d'obtenir une information de phase sur laquelle lesdits compteurs électriques sont respectivement connectés. Dans ce cas, le compteur électrique 120 peut ne pas connaître la phase à laquelle est respectivement connecté chacun des dispositifs identifiés comme découverts à l'étape S602 ou S604.

Dans l'étape S611, le compteur électrique 120 choisit de se rattacher à un dispositif connecté sur une phase différente que le compteur électrique 120 ou sur une phase inconnue, avec une information de qualité de signaux reçus dudit dispositif représentative d'un rapport signal à bruit supérieur ou égal au premier seuil TH1. Lorsque plusieurs dispositifs respectent ces critères, le compteur électrique 120 choisit, parmi ces dispositifs, un dispositif noeud commutateur pour lequel l'information de stabilité montre que ledit dispositif noeud commutateur tient le rôle de noeud commutateur depuis un laps de temps supérieur au second seuil TH2. Lorsque plusieurs dispositifs respectent ce critère supplémentaire ou qu'aucun dispositif ne respecte ce critère supplémentaire, le compteur électrique 120 choisit, parmi ces dispositifs, un dispositif de niveau hiérarchique le plus faible, c'est-à-dire le plus proche hiérarchiquement du concentrateur de données 110. Lorsque plusieurs dispositifs respectent cet autre critère supplémentaire, le compteur électrique 120 choisit, parmi ces dispositifs, le n dispositif présentant le meilleur rapport signal-à-bruit.

Dans l'étape S612, le compteur électrique 120 détermine si, parmi les dispositifs identifiés comme découverts à l'étape S602 ou S604, au moins un dispositif est connecté sur une phase différente que le compteur électrique 120 ou sur une phase inconnue, avec une information de qualité de signaux reçus dudit dispositif représentative d'un rapport signal-à-bruit inférieur au premier seuil TH1 et supérieur ou égal au troisième seuil TH3. Si tel est le cas, une étape S613 est effectuée ; sinon, il est considéré qu'aucun dispositif découvert ne permet un rattachement avec une qualité de communication suffisante, et l'étape S603 est répétée.

Dans l'étape S613, le compteur électrique 120 choisit de se rattacher à un dispositif connecté sur une phase différente que le compteur électrique 120 ou sur une phase inconnue, avec une information de qualité de signaux reçus dudit dispositif représentative d'un rapport signal à bruit inférieur au premier seuil TH1 et supérieur ou égal au troisième seuil TH3. Lorsque plusieurs dispositifs respectent ces critères, le compteur électrique 120 choisit, parmi ces dispositifs, un dispositif pour lequel l'information de qualité de signaux reçus dudit dispositif est représentative du meilleur rapport signal à bruit. Lorsque plusieurs dispositifs présentent ce meilleur rapport signal à bruit, le compteur électrique 120 choisit, parmi ces dispositifs, un dispositif noeud commutateur pour lequel l'information de stabilité montre que ledit dispositif noeud commutateur tient le rôle de noeud commutateur depuis un laps de temps supérieur au second seuil TH2. Lorsque plusieurs dispositifs respectent ce critère supplémentaire ou qu'aucun dispositif ne respecte ce critère supplémentaire, le compteur électrique 120 choisit, parmi ces dispositifs, un dispositif de niveau hiérarchique le plus faible, c'est-à-dire le plus proche hiérarchiquement du concentrateur de données 110. Lorsque plusieurs dispositifs respectent cet autre critère supplémentaire, le compteur électrique 120 choisit arbitrairement, parmi ces dispositifs, un dispositif pour se rattacher.

La Fig. 7 illustre schématiquement un algorithme, mis en oeuvre par un noeud commutateur, de propagation d'informations pour permettre à un compteur électrique de décider à quel noeud commutateur se rattacher. En d'autres termes, l'algorithme de la Fig. 7 permet au compteur électrique d'obtenir des informations relatives au noeud commutateur. L'algorithme de la Fig. 7 est aussi préférentiellement mis en oeuvre par le concentrateur de données 110. Considérons que l'algorithme est mis en oeuvre par le compteur électrique 120, le compteur électrique 120 étant alors un noeud commutateur.

Dans une étape S701, le compteur électrique 120 obtient une information de phase sur laquelle est connecté le compteur électrique 120. Comme déjà mentionné, cette information de phase peut être fournie au compteur électrique 120 au moment de l'installation du compteur électrique 120, ou par un autre moyen. Le compteur électrique 120 peut en outre obtenir des informations complémentaires, telles qu'une information représentative du laps de temps écoulé depuis que le compteur électrique 120 a pris son rôle de noeud commutateur.

Dans une étape S702 suivante, le compteur électrique 120 prépare un envoi de balise. Un exemple de format de balise conforme aux spécifications PRIME est représenté à la Fig. 8. Il convient de notamment noter que le champ BCN.LEVEL permet au compteur électrique 120 d'indiquer le niveau hiérarchique, du réseau de communication, auquel appartient le compteur électrique 120.

Dans une étape S703 suivante, le compteur électrique 120 modifie la balise pour au moins inclure ladite information de phase sur laquelle est connecté le compteur électrique 120. Le compteur électrique 120 peut en outre modifier la balise pour inclure ladite information représentative du laps de temps écoulé depuis que le compteur électrique 120 a pris son rôle de noeud commutateur.

Dans un premier mode de réalisation de l'étape S703, le compteur électrique 120 modifie le champ grisé sur la Fig. 8 au troisième mot de 16 bits du bloc de données protocolaires PDU (« Protocol Data Unit » en anglais) pour communiquer l'information de phase sur laquelle le compteur électrique 120 est connecté, lorsque le réseau d'alimentation électrique 100 est triphasé. Ce champ est un champ de deux bits actuellement réservé, pour un usage futur, des spécifications PRIME. Les compteurs électriques implémentant les spécifications PRIME mais n'ayant pas connaissance de la présente invention s'attendent à ce que ce champ soit mis à zéro. Les trois autres valeurs possibles de ce champ peuvent alors être utilisées pour communiquer l'information de phase sur laquelle le compteur électrique 120 est connecté. Par exemple, la valeur binaire « 01 » peut indiquer que le compteur électrique 120 est connecté à la première phase du réseau triphasé d'alimentation électrique, la valeur binaire « 10 » peut indiquer que le compteur électrique 120 est connecté à la seconde phase du réseau triphasé d'alimentation électrique et valeur binaire « 11 » peut indiquer que le compteur électrique 120 est connecté à la troisième phase du réseau triphasé d'alimentation électrique.

Dans ce premier mode de réalisation de l'étape S703, le compteur électrique 120 peut en outre modifier le champ BCN.DNCOST du bloc de données protocolaires PDU de la Fig. 8 pour fournir l'information représentative du laps de temps écoulé depuis que le compteur électrique 120 a pris son rôle de noeud commutateur. Dans les spécifications PRIME, le champ BCN.DNCOST est utilisé pour fournir une information de coût de liaison descendante (« downlink » en anglais) depuis le noeud de base jusqu'au noeud commutateur émettant la balise : plus la valeur du champ BCN.DNCOST est faible, meilleure est la qualité de la liaison descendante. Le bit de poids faible peut être utilisé pour fournir l'information représentative du laps de temps écoulé depuis que le compteur électrique 120 a pris son rôle de noeud commutateur. Par exemple, si le bit de poids faible est mis à « 0 », cela signifie que le compteur électrique 120 joue le rôle de noeud commutateur depuis un laps de temps supérieur ou égal au second seuil TH2, et si le bit de poids faible est mis à « 1 », cela signifie que le compteur électrique 120 joue le rôle de noeud commutateur depuis un laps de temps inférieur au second seuil TH2. D'une manière générale, la parité du champ BCN.DNCOST est alors représentative du laps de temps depuis lequel ledit compteur électrique 120 agit comme noeud commutateur.

Dans un second mode de réalisation de l'étape S703, le compteur électrique 120 modifie le champ BCN.DNCOST du bloc de données protocolaires PDU de la Fig. 8 pour communiquer l'information de phase sur laquelle le compteur électrique 120 est connecté. Dans le cadre d'un réseau triphasé d'alimentation électrique, un modulo 3 peut alors être utilisé sur la valeur du champ BCN.DNCOST, puisque trois valeurs sont possibles pour l'information de phase. Plus généralement, pour un réseau polyphasé d'alimentation électrique, un modulo N peut être utilisé sur la valeur du champ BCN.DNCOST, où N est le nombre de phases du réseau polyphasé d'alimentation électrique. Ainsi, le compteur électrique 120 adapte la valeur du champ BCN.DNCOST de sorte que cette valeur modulo N soit représentative de la phase sur laquelle est connecté le compteur électrique 120. Un compteur électrique recevant une balise ainsi modifiée applique un modulo N sur la valeur du champ BCN.DNCOST pour déterminer la phase sur laquelle est connecté le noeud commutateur ayant émis la balise.

Dans un troisième mode de réalisation de l'étape S703, le compteur électrique 120 modifie le champ BCN.DNCOST du bloc de données protocolaires PDU de la Fig. 8 pour communiquer l'information de phase sur laquelle le compteur électrique 120 est connecté et pour fournir l'information représentative du laps de temps écoulé depuis que le compteur électrique 120 a pris son rôle de noeud commutateur. Dans le cadre d'un réseau triphasé d'alimentation électrique, un modulo 6 peut alors être utilisé sur la valeur du champ BCN.DNCOST, puisque trois valeurs sont possibles pour l'information de phase et deux valeurs peuvent suffire pour l'information représentative du laps de temps écoulé depuis que le compteur électrique 120 a pris son rôle de noeud commutateur. Plus généralement, pour un réseau polyphasé d'alimentation électrique, un modulo MxN peut être utilisé sur la valeur du champ BCN.DNCOST, où N est le nombre de phases du réseau polyphasé d'alimentation électrique et M est le nombre d'états que peut prendre l'information représentative du laps de temps écoulé depuis que ledit noeud commutateur a pris son rôle de noeud commutateur. Un compteur électrique recevant une balise ainsi modifiée applique un modulo MxN sur la valeur du champ BCN.DNCOST pour déterminer la phase sur laquelle est connecté le noeud commutateur ayant émis la balise, ainsi que l'information représentative du laps de temps écoulé depuis que ledit noeud commutateur a pris son rôle de noeud commutateur. Par exemple, dans le cas d'un réseau triphasé (N=3) d'alimentation électrique et où deux valeurs (M=2) suffisent pour caractériser l'information représentative du laps de temps écoulé depuis que le compteur électrique 120 a pris son rôle de noeud commutateur : si la valeur du champ BCN.DNCOST modulo 6 donne 0, cela signifie que le compteur électrique 120 est connecté sur la première phase du réseau triphasé d'alimentation électrique et que le compteur électrique 120 joue le rôle de noeud commutateur depuis un laps de temps supérieur ou égal au second seuil TH2 ; si la valeur du champ BCN.DNCOST modulo 6 donne 1, cela signifie que le compteur électrique 120 est connecté sur la seconde phase du réseau triphasé d'alimentation électrique et que le compteur électrique 120 joue le rôle de noeud commutateur depuis un laps de temps supérieur ou égal au second seuil TH2 ; si la valeur du champ BCN.DNCOST modulo 6 donne 2, cela signifie que le compteur électrique 120 est connecté sur la troisième phase du réseau triphasé d'alimentation électrique et que le compteur électrique 120 joue le rôle de noeud commutateur depuis un laps de temps supérieur ou égal au second seuil TH2 ; si la valeur du champ BCN.DNCOST modulo 6 donne 3, cela signifie que le compteur électrique 120 est connecté sur la première phase du réseau triphasé d'alimentation électrique et que le compteur électrique 120 joue le rôle de noeud commutateur depuis un laps de temps inférieur au second seuil TH2 ; si la valeur du champ BCN.DNCOST modulo 6 donne 4, cela signifie que le compteur électrique 120 est connecté sur la seconde phase du réseau triphasé d'alimentation électrique et que le compteur électrique 120 joue le rôle de noeud commutateur depuis un laps de temps inférieur au second seuil TH2 ; et si la valeur du champ BCN.DNCOST modulo 6 donne 5, cela signifie que le compteur électrique 120 est connecté sur la troisième phase du réseau triphasé d'alimentation électrique et que le compteur électrique 120 joue le rôle de noeud commutateur depuis un laps de temps inférieur au second seuil TH2.

Préférentiellement, le compteur électrique 120 modifie la valeur du champ BCN.DNCOST de telle sorte que, pour un même chemin, cette valeur modifiée est plus petite lorsque le compteur électrique 120 joue le rôle de noeud commutateur depuis un laps de temps supérieur ou égal au second seuil TH2 que lorsque le compteur électrique 120 joue le rôle de noeud commutateur depuis un laps de temps inférieur au second seuil TH2.

Quand le compteur électrique 120 modifie la valeur du champ BCN.DNCOST, le compteur électrique 120 doit s'assurer que cette valeur reste comprise entre une borne minimum, *i.e.* « 0 », et une borne maximum, *i.e.* « 255 », telles que définies dans les spécifications PRIME.

Dans une étape S704 suivante, le compteur électrique 120 transmet la balise modifiée.

Dans un mode de réalisation particulier, le compteur électrique 120 modifie le champ grisé sur la Fig. 8 au premier mot de 16 bits du bloc de données protocolaires PDU pour indiquer que la balise comporte au moins une information de phase sur laquelle est connecté le compteur électrique 120. Ce champ est un champ d'un bit actuellement réservé, pour un usage futur, des spécifications PRIME. Les compteurs électriques implémentant les spécifications PRIME mais n'ayant pas connaissance de la présente invention s'attendent à ce que ce champ soit mis à zéro. L'autre valeur possible, *i.e.* « 1 », de ce champ peut alors être utilisée pour indiquer que la balise comporte au moins une information de phase sur laquelle est connecté le compteur électrique. Ainsi, lorsqu'un compteur électrique reçoit une balise, en analysant ce champ, ledit compteur électrique est capable de déterminer si la balise comporte l'information de phase sur laquelle est connecté le noeud commutateur ayant émis la balise et potentiellement l'information représentative du laps de temps écoulé depuis que ledit noeud commutateur a pris son rôle de noeud commutateur. Ainsi, la présente invention peut être mise en oeuvre au sein d'un réseau de communication comportant des compteurs électriques n'ayant pas connaissance de la présente invention.

De plus, en indiquant si la balise comporte au moins une information de phase sur laquelle est connecté le compteur électrique 120, cela permet au compteur électrique de ne pas appliquer les modifications de l'étape S703 à chaque balise à transmettre. En effet, les spécifications PRIME définissent un paramètre N_{miss-beacon} qui représente un nombre maximum de balises erronées que peut recevoir un compteur électrique sans se déconnecter du réseau. Ainsi, lorsque N_{miss-beacon} balises erronées sont successivement reçues du noeud commutateur auquel ledit compteur électrique est rattaché, ledit compteur électrique se déconnecte du réseau de communication. Il est alors avantageux que le compteur électrique 120 jouant le rôle de noeud commutateur ne modifie qu'un nombre, inférieur à N_{miss-beacon}, de balises modifiées successives, par exemple trois sur cinq.

Dans un mode de réalisation particulier, un compteur électrique recevant un nombre K > N_{miss-beacon} de balises successives de la part du noeud commutateur auquel ledit compteur électrique est rattaché peut décider de ne plus prendre en compte la phase à laquelle est connecté ledit compteur électrique et les phases auxquelles sont connectés les noeuds commutateurs découverts pour décider à quel noeud commutateur se rattacher. Par exemple, K=10.

Ainsi, en prenant en compte les phases sur lesquelles sont connectés les compteurs électriques, l'utilisation de chemins de diaphonie est limitée. En reprenant l'exemple de réseau hiérarchisé de communication de la Fig. 3, la mise en oeuvre de l'invention peut permettre de rattacher le noeud terminal 321 au noeud commutateur 310, en considérant que le noeud terminal 321 et le noeud commutateur 310 sont connectés sur une même phase, et de rattacher le noeud terminal 323 au noeud commutateur 312, en considérant que le noeud terminal 323 et le noeud commutateur 312 sont connectés sur une même phase. Les conditions de transmission dans le réseau hiérarchisé de communication sont ainsi améliorées.

## Revendications

1. Procédé de décision de rattachement d'un premier compteur électrique (120) à un second compteur électrique servant de relais audit premier compteur électrique dans un réseau hiérarchisé de communication défini au-dessus d'un réseau polyphasé d'alimentation électrique (100) ou à un concentrateur de données (110) qui est racine du réseau hiérarchisé de communication, **caractérisé en ce que** le premier compteur électrique effectue les étapes suivantes :
- obtenir (S401) une première information de phase représentative d'une phase à laquelle est connecté le premier compteur électrique sur le réseau polyphasé d'alimentation électrique ;
- obtenir (S405) des secondes informations de phase représentatives de phases auxquelles sont respectivement connectés, sur le réseau polyphasé d'alimentation électrique, des dispositifs du réseau hiérarchisé de communication, chacun parmi lesdits dispositifs étant un compteur électrique auquel le premier compteur électrique peut être rattaché ou le concentrateur de données lorsque le premier compteur électrique peut y être rattaché ; et
- choisir (S406) le dispositif auquel le premier compteur électrique doit être rattaché, en prenant au moins en compte ladite première information de phase et lesdites secondes informations de phase.

2. Procédé selon la revendication 1, **caractérisé en ce que** le premier compteur électrique obtient des informations de niveaux hiérarchiques auxquels les dispositifs, auxquels le premier compteur électrique peut être rattaché, appartiennent respectivement au sein du réseau hiérarchisé de communication, et **en ce que** le premier compteur électrique choisit le dispositif auquel le premier compteur électrique doit être rattaché en prenant en outre en compte lesdites informations de niveaux hiérarchiques.

3. Procédé selon l'une quelconque des revendications 1 et 2, **caractérisé en ce que** le premier compteur électrique obtient des informations représentatives de laps de temps depuis lesquels les compteurs électriques auxquels le premier compteur électrique peut être rattaché agissent respectivement comme relais au sein du réseau hiérarchisé de communication, et **en ce que** le premier compteur électrique choisit le dispositif auquel le premier compteur électrique doit être rattaché en prenant en outre en compte lesdites informations représentatives de laps de temps.

4. Procédé selon l'une quelconque des revendications 1 à 3, **caractérisé en ce que** le premier compteur électrique obtient des informations représentatives de rapports signal-à-bruit obtenus par mesures effectuées par le premier compteur électrique sur des signaux reçus en provenance respectivement des dispositifs auxquels le premier compteur électrique peut être rattaché, et **en ce que** le premier compteur électrique choisit le dispositif auquel le premier compteur électrique doit être rattaché en prenant en outre en compte lesdites informations représentatives de rapports signal-à-bruit.

5. Procédé selon l'une quelconque des revendications 1 à 4, **caractérisé en ce que** chaque dispositif auquel le premier compteur électrique peut être rattaché transmet (S704), dans une balise, au moins la seconde information de phase représentative de la phase à laquelle ledit dispositif est connecté sur le réseau polyphasé d'alimentation électrique.

6. Procédé selon la revendication 5, **caractérisé en ce qu'**un champ de ladite balise indique si ladite balise inclut au moins la seconde information de phase représentative de la phase à laquelle ledit dispositif est connecté sur le réseau polyphasé d'alimentation électrique, et **en ce que**, sur un ensemble de N_{miss-beacon} balises consécutives, où N_{miss-beacon} est représentatif d'un nombre maximum de balises consécutives erronées avant détachement du réseau hiérarchisé de communication, ledit dispositif émet un nombre K de balises incluant au moins ladite seconde information de phase, avec K < N_{miss-beacon}.

7. Procédé selon l'une quelconque des revendications 5 et 6, **caractérisé en ce que** ladite seconde information de phase est incluse dans un champ dédié de la balise, et **en ce que**, ledit dispositif étant un compteur électrique, la balise comportant en outre un champ de coût de chemin depuis la racine du réseau hiérarchique jusqu'audit dispositif, la parité du champ de coût de chemin est représentative d'un laps de temps depuis lequel ledit dispositif agit comme relais au sein du réseau hiérarchisé de communication.

8. Procédé selon l'une quelconque des revendications 5 et 6, **caractérisé en ce que**, la balise comportant en outre un champ de coût de chemin depuis une racine du réseau hiérarchique et ledit dispositif, ledit dispositif étant un compteur électrique, ledit dispositif adapte la valeur dudit champ de coût de chemin de telle sorte que ladite valeur modulo MxN fournisse ladite seconde information de phase et une information représentative d'un laps de temps depuis lequel ledit dispositif agit comme relais au sein du réseau hiérarchisé de communication, avec N représentant le nombre de phases du réseau polyphasé d'alimentation électrique et M représentant un nombre d'états que peut prendre ladite information représentative d'un laps de temps.

9. Programme d'ordinateur, **caractérisé en ce qu'**il comprend des instructions pour mettre en oeuvre, par un compteur électrique, le procédé selon l'une quelconque des revendications 1 à 8, lorsque ledit programme est exécuté par un processeur dudit compteur électrique.

10. Moyens de stockage, **caractérisés en ce qu'**ils stockent un programme d'ordinateur comprenant des instructions pour mettre en oeuvre, par un compteur électrique, le procédé selon l'une quelconque des revendications 1 à 8, lorsque ledit programme est exécuté par un processeur dudit compteur électrique.

11. Compteur électrique (120), dit premier compteur électrique, adapté pour décider d'un rattachement dudit premier compteur électrique à un second compteur électrique servant de relais audit premier compteur électrique dans un réseau hiérarchisé de communication défini au-dessus d'un réseau polyphasé d'alimentation électrique (100) ou à un concentrateur de données (110) qui est racine du réseau hiérarchisé de communication, **caractérisé en ce que** le premier compteur électrique comporte :
- des moyens pour obtenir (S401) une première information de phase représentative d'une phase à laquelle est connecté le premier compteur électrique sur le réseau polyphasé d'alimentation électrique ;
- des moyens pour obtenir (S405) des secondes informations de phase représentatives de phases auxquelles sont respectivement connectés, sur le réseau polyphasé d'alimentation électrique, des dispositifs du réseau hiérarchisé de communication, chacun parmi lesdits dispositifs étant un compteur électrique auquel le premier compteur électrique peut être rattaché ou le concentrateur de données lorsque le premier compteur électrique peut y être rattaché ; et
- des moyens pour choisir (S406) le dispositif auquel le premier compteur électrique doit être rattaché, en prenant au moins en compte ladite première information de phase et lesdites secondes informations de phase.

## Patentansprüche

1. Entscheidungsverfahren zur Anbindung eines ersten Stromzählers (120) an einen zweiten Stromzähler, der dem ersten Stromzähler in einem, über dem Mehrphasen-Stromversorgungsnetzwerk (100) definierten hierarchisierten Kommunikationsnetz oder in einem, die Wurzel des hierarchisierten Kommunikationsnetzwerks bildenden Datenkonzentrator (110) als Relais dient, **dadurch gekennzeichnet, dass** der erste Stromzähler die folgenden Schritte ausführt, die darin bestehen :
- eine erste Phaseninformation zu erhalten (S401), die für eine Phase repräsentativ ist, an die der erste Stromzähler im Mehrphasen-Stromversorgungsnetzwerk angeschlossen ist,
- zweite Phaseninformationen zu erhalten (S405), die für Phasen repräsentativ sind, an die jeweils Vorrichtungen des definierten hierarchisierten Kommunikationsnetzes im Mehrphasen-Stromversorgungsnetzwerk angeschlossen sind, wobei jede der genannten Vorrichtungen ein Stromzähler, an den der erste Stromzähler angebunden werden kann, oder der Datenkonzentrator ist, wenn der erste Stromzähler daran angebunden werden kann, und
- die Vorrichtung, an die der erste Stromzähler angebunden werden soll, unter Berücksichtigung wenigstens der genannten ersten Phaseninformation und der genannten zweiten Phaseninformationen auszuwählen (S406).

2. Verfahren nach Patentanspruch 1, **dadurch gekennzeichnet, dass** der erste Stromzähler Informationen bezüglich hierarchischer Ebenen erhält, denen jeweils die Vorrichtungen, an die der erste Stromzähler angebunden werden kann, innerhalb des hierarchisierten Kommunkationsnetzes angehören, und dadurch, dass der erste Stromzähler die Vorrichtung auswählt, an die der erste Stromzähler angebunden werden soll, in dem er zudem die genannten Informationen bezüglich der hierarchischen Ebenen berücksichtigt.

3. Verfahren nach einem der Patentansprüche 1 und 2, **dadurch gekennzeichnet, dass** der erste Stromzähler Informationen erhält, die für Zeiträume repräsenstativ sind, seit denen die Stromzähler, an die der erste Stromzähler angebunden werden kann, innerhalb des hierarchisierten Kommunikationsnetzwerks jeweils als Relais fungieren, und dadurch dass der erste Stromzähler die Vorrichtung auswählt, an die der erste Stromzähler angebunden werden soll, indem er zudem die für die Zeiträume repräsentativen Informationen berücksichtigt.

4. Verfahren nach einem der Patentansprüche 1 bis 3, **dadurch gekennzeichnet, dass** der erste Stromzähler Informationen erhält, die für Signal/Rauschverhältnisse repräsentativ sind, die durch Messungen gewonnen wurden, die vom ersten Stromzähler an Signalen durchgeführt wurden, die jeweils von den Vorrichtungen stammen, an die der erste Stromzähler angebunden werden kann und dadurch, dass der erste Stromzähler die Vorrichtung auswählt, an die der erste Stromzähler angebunden werden soll, in dem er zudem die genannten, für die Signal/Rauschverhältnisse repräsentativen Informationen berücksichtigt.

5. Verfahren nach einem der Patentansprüche 1 bis 4, **dadurch gekennzeichnet, dass** jede Vorrichtung, an die der erste Stromzähler angebunden werden kann, in einem Identifizierungskennzeichen wenigstens die zweite Phaseninformation, die für die Phase repräsentativ ist, an die die genannte Vorrichtung im Mehrphasen-Stromversorgungsnetzwerk angeschlossen ist, überträgt.

6. Verfahren nach Patentanspruch 5, **dadurch gekennzeichnet, dass** ein Feld des genannten Identifizierungskennzeichens anzeigt, ob das genannte Identifizierungskennzeichen wenigstens die zweite Phaseninformation, die für die Phase repräsentativ ist, an die die genannte Vorrichtung im MehrphasenStromversorgungsnetzwerk angeschlossen ist, umfasst und dadurch, dass die genannte Vorrichtung von einer Gruppe aufeinanderfolgender Identifizierungskennzeichen N_{miss-beacon}, wobei N_{miss-beacon} eine maximale Anzahl aufeinanderfolgender falscher Identifizierungskennzeichen vor Trennung von dem hierarchisierten Kommunikationsnetzwerk darstellt, eine Anzahl K von Identifizierungskennzeichen emittiert, die wenigstens die genannte zweite Phaseninformation umfassen, wobei K<N_{miss-beacon} ist.

7. Verfahren nach einem der Patentansprüche 5 und 6, **dadurch gekennzeichnet, dass** die genannte zweite Phaseninformation in ein, dem Identifizierungskennzeichen gewidmeten Feld eingebettet ist und dadurch, dass die genannte Vorrichtung ein Stromzähler ist, wobei das Identifizierungskennzeichen zudem ein Wege-Kosten-Feld von der Wurzel des hierarchischen Netzwerks bis zu der genannten Vorrichtung umfasst, wobei die Parität des Wege-Kosten-Felds für einen Zeitraum repräsentativ ist, seit dem die genannte Vorrichtung innerhalb des hierarchisierten Kommunikationsnetzes als Relais fungiert.

8. Verfahren nach einem der Patentansprüche 5 und 6, **dadurch gekennzeichnet, dass** das Identifizierungskennzeichen zudem ein Wege-Kosten-Feld von einer Wurzel des hierarchischen Netzwerks und der genannten Vorrichtung umfasst, wobei die genannte Vorrichtung ein Stromzähler ist, dass die genannte Vorrichtung den Wert des genannten Wege-Kosten-Felds so anpasst, dass der genannte Modulowert MxN die genannte zweite Phaseninformation liefert und eine Information, die für einen Zeitraum repräsentativ ist, seit dem die genannte Vorrichtung innerhalb des hierarchisierten Kommunikationsnetzwerk als Relais fungiert, wobei N die Anzahl der Phasen des Mehrphasen-Stromversorgungsnetzwerks und M die Anzahl der Zustände darstellt, die die genannte, für eine Zeitdauer repräsentative Information einnehmen kann.

9. Computerprogramm, **dadurch gekennzeichnet, dass** es Anweisungen umfasst, um das Verfahren nach einem der Patentansprüche 1 bis 8 durch einen Stromzähler umzusetzen, wenn das genannte Programm von einem Prozessor des genannten Stromzählers ausgeführt wird.

10. Speichermittel, **dadurch gekennzeichnet, dass** sie ein Computerprogramm speichern, das Anweisungen umfasst, um das Verfahren nach einem der Patentansprüche 1 bis 8 durch einen Stromzähler umzusetzen, wenn das genannte Programm von einem Prozessor des genannten Stromzählers ausgeführt wird.

11. Stromzähler (120), genannt erster Stromzähler, der dazu geeignet ist, die Anbindung des genannten ersten Stromzählers an einen zweiten Stromzähler zu entscheiden, der dem ersten Stromzähler in einem hierarchisierten, über einem Mehrphasen-Stromversorgungsnetzwerk (100) definierten Kommunikationsnetzwerk oder in einem, die Wurzel des hierarchisierten Kommunikationsnetzwerk bildenden Datenkonzentrator (110) als Relais dient, **dadurch gekennzeichnet, dass** der erste Stromzähler folgendes umfasst:
- Mittel, um eine erste Phaseninformation zu erhalten (S401), die für eine Phase repräsentativ ist, an die der erste Stromzähler im Mehrphasen-Stromversorgungsnetzwerk angeschlossen ist,
- Mittel, um zweite Phaseninformationen zu erhalten (S405), die für Phasen repräsentativ sind, an die jeweils die Vorrichtungen des hierarchisierten Kommunikationsnetzes im Mehrphasen-Stromversorgungsnetzwerk angeschlossen sind, wobei jede der genannten Vorrichtungen ein Stromzähler, an den der erste Stromzähler angebunden werden kann, oder der Datenkonzentrator ist, wenn der erste Stromzähler daran angebunden werden kann, und
- Mittel, um die Vorrichtung, an die der erste Stromzähler angebunden werden soll, unter Berücksichtigung wenigstens der genannten ersten Phaseninformation und der genannten zweiten Phaseninformationen auszuwählen (S406).

## Claims

1. Decision method for linking a first electric meter (120) to a second electric meter serving as relay to said first electric meter in a hierarchical communication network defined above a polyphase electrical supply network (100) or to a data hub (110) which is the root of the hierarchical communication network, **characterized in that** the first electric meter performs the following steps:
- obtaining (S401) a first phase information item representative of a phase to which the first electric meter is connected on the polyphase electrical supply network;
- obtaining (S405) second phase information items representative of phases to which devices of the hierarchical communication network are respectively connected, on the polyphase electrical supply network, each of said devices being an electric meter to which the first electric meter can be linked or the data hub when the first electric meter can be linked thereto; and
- choosing (S406) the device to which the first electric meter must be linked, by taking into account at least said first phase information item and said second phase information items.

2. Method according to Claim 1, **characterized in that** the first electric meter obtains information items on hierarchical levels to which the devices, to which the first electric meter can be linked, belong respectively within the hierarchical communication network, and **in that** the first electric meter chooses the device to which the first electric meter must be linked by further taking into account said hierarchical level information items.

3. Method according to either one of Claims 1 and 2, **characterized in that** the first electric meter obtains information items representative of time periods since which the electric meters to which the first electric meter can be linked act respectively as relays within the hierarchical communication network, and **in that** the first electric meter chooses the device to which the first electric meter must be linked by further taking into account said information items representative of time periods.

4. Method according to any one of Claims 1 to 3, **characterized in that** the first electric meter obtains information items representative of signal-to-noise ratios obtained by measurements performed by the first electric meter on signals received from, respectively, the devices to which the first electric meter can be linked, and **in that** the first electric meter chooses the device to which the first electric meter must be linked by further taking into account said information items representative of signal-to-noise ratios.

5. Method according to any one of Claims 1 to 4, **characterized in that** each device to which the first electric meter can be linked transmits (S704), in a beacon, at least the second phase information item representative of the phase to which said device is connected on the polyphase electrical supply network.

6. Method according to Claim 5, **characterized in that** a field of said beacon indicates whether said beacon includes at least the second phase information item representative of the phase to which said device is connected on the polyphase electrical supply network, and **in that**, over a set of N_{miss-beacon} consecutive beacons, in which N_{miss-beacon} is representative of a maximum number of incorrect consecutive beacons before detachment from the hierarchical communication network, said device emits a number K of beacons including at least said second phase information item, with K < N_{miss-beacon}.

7. Method according to either one of Claims 5 and 6, **characterized in that** said second phase information item is included in a dedicated field of the beacon, and **in that**, said device being an electric meter, the beacon further comprises a field of path cost from the root of the hierarchical network to said device, the parity of the field of path cost is representative of a time period since which said device acts as relay within the hierarchical communication network.

8. Method according to either one of Claims 5 and 6, **characterized in that**, the beacon further comprising a field of path cost from a root of the hierarchical network and said device, said device being an electric meter, said device adapts the value of said field of path cost such that said value modulo MxN supplies said second phase information item and an information item representative of a time period since which said device acts as relay within the hierarchical communication network, with N representing the number of phases of the polyphase electrical supply network and M representing a number of states that said information item representative of a time period can take.

9. Computer program, **characterized in that** it comprises instructions for the implementation, by an electric meter, of the method according to any one of Claims 1 to 8, when said program is run by a processor of said electric meter.

10. Storage means, **characterized in that** they store a computer program comprising instructions for the implementation, by an electric meter, of the method according to any one of Claims 1 to 8, when said program is run by a processor of said electric meter.

11. Electric meter (120), called first electric meter, adapted to decide to link said first electric meter to a second electric meter serving as relay for said first electric meter in a hierarchical communication network defined above of a polyphase electrical supply network (100) or to a data hub (110) which is the root of the hierarchical communication network, **characterized in that** the first electric meter comprises:
- means for obtaining (S401) a first phase information item representative of a phase to which the first electric meter is connected on the polyphase electrical supply network;
- means for obtaining (S405) second phase information items representative of phases to which devices of the hierarchical communication network are respectively connected, on the polyphase electrical supply network, each of said devices being an electric meter to which the first electric meter can be linked or the data hub when the first electric meter can be linked thereto; and
- means for choosing (S406) the device to which the first electric meter must be linked, by taking into account at least said first phase information item and said second phase information items.
